# EUROPEAN PATENT SPECIFICATION

(11) **EP 3 779 738 B1**
(45) Date of publication and mention of the grant of the patent: **06.08.2025**
(21) Application number: 19785812.9
(22) Date of filing: 09.04.2019
(51) Int. Cl.: G06F 21/32, G06F 1/32

(54) **FINGERPRINT IDENTIFICATION METHOD AND MOBILE TERMINAL**
VERFAHREN ZUR FINGERABDRUCKIDENTIFIKATION UND MOBILES ENDGERÄT
PROCÉDÉ D'IDENTIFICATION D'EMPREINTES DIGITALES ET TERMINAL MOBILE

(30) Priority: 12.04.2018 CN 201810326657
(43) Date of publication of application: 17.02.2021
(60) Divisional application: 25185817.1
(73) Proprietor: Vivo Mobile Communication Co., Ltd., Dongguan, Guangdong 523860 (CN)
(72) Inventor: XU, Daqing, Dongguan, Guangdong 523860 (CN)
(74) Representative: Lavoix
(86) International application number: PCT/CN2019/081901
(87) International publication number: WO 2019/196832

(56) References cited:
- EP-A1- 3 223 123
- EP-A1- 3 396 489
- CN-A- 104 915 123
- CN-A- 107 172 266
- CN-A- 107 220 533
- CN-A- 107 295 195
- CN-A- 107 316 033
- CN-A- 107 688 734
- CN-A- 107 728 979
- CN-A- 108 427 876
- US-A1- 2019 102 597

## Description

### TECHNICAL FIELD

This disclosure relates to the field of communication technologies, and in particular, to a fingerprint recognition method and a mobile terminal.

### BACKGROUND

With continuous growth in the size of display screens of mobile terminals and the quantity of application scenarios featuring high power consumption, it is increasingly important to reduce power consumption and extend battery life of the mobile terminals. In related technologies, many mobile terminals have a fingerprint recognition function in which a fingerprint recognition module collects fingerprint information of a user for recognition, to authenticate a user identity. An under-screen photoelectric fingerprint recognition technology emerges to facilitate usage of the fingerprint recognition function by users. The principle of this technology is that when a finger touches a screen, a display screen is displayed with high brightness, light reflected by a fingerprint on a surface of the finger is received by an optical fingerprint sensor under the screen, and the fingerprint is recognized after processing.

The foregoing photoelectric fingerprint recognition technology needs to rely on light reflection to recognize a fingerprint. Therefore, higher brightness of the screen (for example, an active-matrix organic light emitting diode (AMOLED) screen or a micro light emitting diode (Micro Light Emitting Diode, Micro LED) screen) is more helpful to improve a fingerprint recognition rate. However, high brightness of the entire screen correspondingly means higher power consumption. In addition, use frequency of the fingerprint recognition function is usually high. This greatly reduces battery life of the mobile terminals.

In the related technologies, an effective solution has not been proposed for the problem of high power consumption in fingerprint recognition of the mobile terminals.

CN107172266A discloses a fingerprint recognition control method, a corresponding fingerprint recognition control device and the mobile terminal. By using the method disclosed by the embodiment of the invention, the fingerprint entry speed is improved, and the power consumption of the mobile terminal is lowered.
EP 3223123A1 discloses an embedded active matrix organic light emitting diode (AMOLED) fingerprint sensor. CN107728979A discloses a processing method and an electronic device. CN 107295195 A discloses a fingerprint identification method and a mobile terminal.

### SUMMARY

Embodiments of this disclosure provide a fingerprint recognition method and a mobile terminal, as defined in the appended set of claims, to solve the problem of high power consumption in fingerprint recognition of a mobile terminal.

In the embodiments of this disclosure, if the touch operation on the screen of the mobile terminal is detected, the touch area, on which the touch operation is performed, of the screen of the mobile terminal is recognized; if it is detected that the mobile terminal is in the state for fingerprint authentication, the brightness value of the touch area is controlled to be greater than or equal to the first preset brightness value, and the brightness value of the display area other than the touch area of the screen of the mobile terminal is controlled to be less than the first preset brightness value; and the fingerprint information of the touch area is collected and recognized by using the fingerprint recognition module. Different from improving brightness of an entire screen to increase a fingerprint recognition rate, in the embodiments of this disclosure, only the brightness value of the touch area is controlled to be greater than or equal to the first preset brightness value to perform fingerprint collection and recognition. This can reduce power consumption and extend battery life of the mobile terminal while ensuring a relatively high fingerprint recognition rate.

### BRIEF DESCRIPTION OF DRAWINGS

To describe the technical solutions in embodiments of this disclosure more clearly, the following briefly describes the accompanying drawings required for describing the embodiments of this disclosure. Apparently, the accompanying drawings in the following description show merely some embodiments of this disclosure, and persons of ordinary skill in the art may still derive other drawings from these accompanying drawings without creative efforts.
FIG. 1 is a flowchart of a fingerprint recognition method according to an embodiment of this disclosure;
FIG. 2 is a flowchart of a fingerprint recognition method according to another embodiment of this disclosure;
FIG.3 is a schematic diagram of screen display on a mobile terminal according to an embodiment of this disclosure;
FIG. 4 is a flowchart of a fingerprint recognition method according to another embodiment of this disclosure;
FIG. 5 is a structural diagram of a mobile terminal according to an embodiment of this disclosure;
FIG. 6 is a structural diagram of a mobile terminal according to another embodiment of this disclosure; and
FIG. 7 is a schematic diagram of a hardware structure of a mobile terminal for implementing illustrative embodiments of this disclosure not in accordance with the appended claims.

### DESCRIPTION OF EMBODIMENTS

The following clearly describes the technical solutions in the embodiments of this disclosure with reference to the accompanying drawings in the embodiments of this disclosure. Apparently, the described embodiments are merely some but not all of the embodiments of this disclosure. All other embodiments obtained by a person of ordinary skill in the art based on the embodiments of this disclosure without creative efforts shall fall within the protection scope of this disclosure as defined by the appended claims.

An embodiment of this disclosure provides a fingerprint recognition method. The method is applied to a mobile terminal. A screen of the mobile terminal includes a fingerprint recognition module. The fingerprint recognition module may be a module that uses a photoelectric fingerprint recognition technology for fingerprint recognition, and may include an optical sensor and a fingerprint processing chip. Specifically, the optical sensor may receive an optical signal reflected by a fingerprint on a surface of a finger and send the optical signal to the fingerprint processing chip for processing, to recognize fingerprint information.

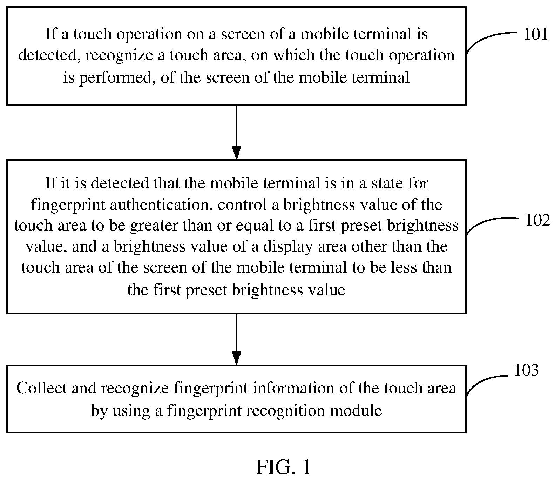

FIG. 1 is a flowchart of a fingerprint recognition method according to an embodiment of this disclosure. As shown in FIG. 1, the following steps are included.

Step 101. If a touch operation on a screen of a mobile terminal is detected, recognize a touch area, on which the touch operation is performed, of the screen of the mobile terminal.

In this embodiment of this disclosure, the screen of the mobile terminal may be an active-matrix organic light emitting diode (Active-Matrix Organic Light Emitting Diode, AMOLED) screen, a micro light emitting diode (Micro Light Emitting Diode, Micro LED) screen, or the like. Specifically, after the touch operation by a user finger on the screen of the mobile terminal is detected, a touch point between the user finger and the screen of the mobile terminal may be detected, and the touch area of the user finger on the screen of the mobile terminal may be determined based on the touch point between the user finger and the screen of the mobile terminal.

Step 102. If it is detected that the mobile terminal is in a state for fingerprint authentication, control a brightness value of the touch area to be greater than or equal to a first preset brightness value, and a brightness value of a display area other than the touch area of the screen of the mobile terminal to be less than the first preset brightness value.

In this embodiment of this disclosure, the mobile terminal being in the state for fingerprint authentication may be the mobile terminal being in a to-be-unlocked state (for example, the mobile terminal is in a screen off state or in a screen lock state) or a pending payment state. The first preset brightness value may be properly set based on an actual condition. For example, the first preset brightness value may be a maximum brightness value of the screen of the mobile terminal, or 90% of a maximum brightness value of the screen of the mobile terminal, to ensure that the touch area is in a high brightness state.

Specifically, when it is detected that the mobile terminal is in the state for fingerprint authentication, it indicates that the touch operation by the user finger on the screen of the mobile terminal is highly likely intended to enter fingerprint information. In this case, the brightness value of the touch area may be controlled to be greater than or equal to the first preset brightness value, thereby ensuring that the touch area is in a high brightness state, so as to collect and recognize a fingerprint on the touch area and improve a fingerprint recognition rate. In addition, the brightness value of the display area other than the touch area of the screen of the mobile terminal is controlled to be less than the first preset brightness value, so as to reduce power consumption of the mobile terminal.

Step 103. Collect and recognize fingerprint information of the touch area by using the fingerprint recognition module.

In this embodiment of this disclosure, the fingerprint recognition module may scan the entire screen of the mobile terminal to collect and recognize the fingerprint information of the user finger, or scan only the touch area to collect and recognize the fingerprint information of the user finger.

Specifically, in this embodiment of this disclosure, when it is detected that the fingerprint information of the user finger needs to be collected, only the touch area of the user finger on the screen of the mobile terminal is controlled to display with high brightness. In this way, the fingerprint recognition module can accurately collect the fingerprint information of the user finger, power consumption of the mobile terminal can be reduced, and battery life of the mobile terminal can be extended.

In this embodiment of this disclosure, the mobile terminal may be a mobile phone, a tablet computer (Tablet Personal Computer), a laptop computer (Laptop Computer), a personal digital assistant (personal digital assistant, PDA), a wearable device (Wearable Device), or the like.

In the fingerprint recognition method in this embodiment of this disclosure, if the touch operation on the screen of the mobile terminal is detected, the touch area, on which the touch operation is performed, of the screen of the mobile terminal is recognized; if it is detected that the mobile terminal is in the state for fingerprint authentication, the brightness value of the touch area is controlled to be greater than or equal to the first preset brightness value, and the brightness value of the display area other than the touch area of the screen of the mobile terminal is controlled to be less than the first preset brightness value; and the fingerprint information of the touch area is collected and recognized by using the fingerprint recognition module. Different from improving brightness of an entire screen to increase a fingerprint recognition rate, in this embodiment of this disclosure, only the brightness value of the touch area is controlled to be greater than or equal to the first preset brightness value to perform fingerprint collection and recognition. This can reduce power consumption and extend battery life of the mobile terminal while ensuring a relatively high fingerprint recognition rate.

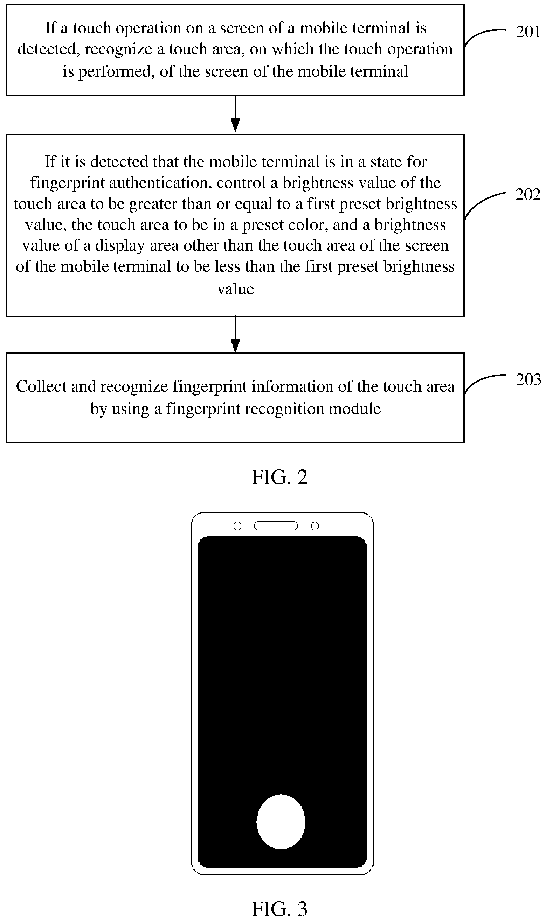

FIG. 2 is a flowchart of a fingerprint recognition method according to an embodiment of this disclosure. A difference between this embodiment of this disclosure and the foregoing embodiment mainly lies in further limitations imposed on step 102, which are intended to further improve accuracy of fingerprint recognition. In this embodiment of this disclosure, the controlling, if it is detected that the mobile terminal is in a state for fingerprint authentication, a brightness value of the touch area to be greater than or equal to a first preset brightness value, and a brightness value of a display area other than the touch area of the screen of the mobile terminal to be less than the first preset brightness value includes: if it is detected that the mobile terminal is in the state for fingerprint authentication, controlling the brightness value of the touch area to be greater than or equal to the first preset brightness value, the touch area to be in a preset color, and the brightness value of the display area other than the touch area of the screen of the mobile terminal to be less than the first preset brightness value.

As shown in FIG. 2, the fingerprint recognition method according to this embodiment of this disclosure includes the following steps.

Step 201. If a touch operation on a screen of a mobile terminal is detected, recognize a touch area, on which the touch operation is performed, of the screen of the mobile terminal.

This step may be the same as step 101. To avoid repetition, details are not described herein again.

Step 202. If it is detected that the mobile terminal is in a state for fingerprint authentication, control a brightness value of the touch area to be greater than or equal to a first preset brightness value, the touch area to be in a preset color, and a brightness value of a display area other than the touch area of the screen of the mobile terminal to be less than the first preset brightness value.

In this embodiment of this disclosure, the preset color may be white or a color close to white. In practical application, displaying the screen in white or a color close to white helps in improving a fingerprint recognition rate. Therefore, in this embodiment of this disclosure, when it is detected that the mobile terminal is in the state for fingerprint authentication, the brightness value of the touch area is controlled to be greater than or equal to the first preset brightness value and the touch area to be in the preset color, to further improve the fingerprint recognition rate.

Optionally, to further reduce power consumption of the mobile terminal, step 202 may include:
if it is detected that the mobile terminal is in a screen off state, controlling the brightness value of the touch area to be greater than or equal to the first preset brightness value, and the touch area to be in the preset color, and keeping the display area other than the touch area of the screen of the mobile terminal in an off state.

In this embodiment of this disclosure, if it is detected that the mobile terminal is in the screen off state, it indicates that current touch by a user on the screen of the mobile terminal is highly likely intended to unlock the screen using a fingerprint. In this case, the brightness value of the touch area may be controlled to be greater than or equal to the first preset brightness value and the touch area to be in the preset color, to improve the fingerprint recognition rate. The display area other than the touch area of the screen of the mobile terminal is kept in the off state, thereby effectively reducing power consumption of the mobile terminal.

It can be understood that when it is detected that the mobile terminal is in the screen off state, the display area other than the touch area of the screen of the mobile terminal may alternatively be displayed in black.

Optionally, to further reduce power consumption of the mobile terminal, step 202 may alternatively include:
if it is detected that the mobile terminal is in a screen lock state, controlling the brightness value of the touch area to be greater than or equal to the first preset brightness value, and the touch area to be in the preset color, and keeping the brightness value of the display area other than the touch area of the screen of the mobile terminal unchanged when the brightness value of the display area other than the touch area of the screen of the mobile terminal is less than the first preset brightness value; or
if it is detected that the mobile terminal is in a screen lock state, controlling the brightness value of the touch area to be greater than or equal to the first preset brightness value, the touch area to be in the preset color, and the brightness value of the display area other than the touch area of the screen of the mobile terminal to be less than or equal to a second preset brightness value, where the second preset brightness value is less than the first preset brightness value.

In this embodiment of this disclosure, when it is detected that the mobile terminal is in the screen lock state, it indicates that current touch by the user on the screen of the mobile terminal is highly likely intended to unlock the screen using a fingerprint. In this case, the brightness value of the touch area may be controlled to be greater than or equal to the first preset brightness value and the touch area to be in the preset color, to improve the fingerprint recognition rate. The brightness value of the display area other than the touch area of the screen of the mobile terminal may be kept unchanged when the brightness value of the display area other than the touch area of the screen of the mobile terminal is less than the first preset brightness value.

The brightness value of the display area other than the touch area of the screen of the mobile terminal may be decreased to or below the second preset brightness value when the brightness value of the display area other than the touch area of the screen of the mobile terminal is not less than the first preset brightness value. If a brightness value of the screen of the mobile terminal is a maximum value when the mobile terminal is in the screen lock state, the brightness value of the touch area may remain maximum and the brightness value of the display area other than the touch area of the screen of the mobile terminal is decreased below the second preset brightness value (50% of the maximum screen brightness value), to reduce power consumption of the mobile terminal.

Optionally, in this embodiment of this disclosure, the brightness value of the touch area may alternatively be directly controlled to be greater than or equal to the first preset brightness value, the touch area to be in the preset color, and the brightness value of the display area other than the touch area of the screen of the mobile terminal to be less than or equal to the second preset brightness value.

Step 203. Collect and recognize fingerprint information of the touch area by using the fingerprint recognition module.

This step may be the same as step 103. To avoid repetition, details are not described herein again.

In the fingerprint recognition method provided in this embodiment of this disclosure, when it is detected that the mobile terminal is in the state for fingerprint authentication, the brightness value of the touch area is controlled to be greater than or equal to the first preset brightness value, the touch area to be in the preset color, and the brightness value of the display area other than the touch area of the screen of the mobile terminal to be less than the first preset brightness value. This can reduce power consumption, extend the battery life of the mobile terminal, and further improve the fingerprint recognition rate.

Optionally, to further decrease power consumption of the mobile terminal, the state for fingerprint authentication includes a screen off state, and the controlling, if it is detected that the mobile terminal is in a state for fingerprint authentication, a brightness value of the touch area to be greater than or equal to a first preset brightness value, and a brightness value of a display area other than the touch area of the screen of the mobile terminal to be less than the first preset brightness value includes:
if it is detected that the mobile terminal is in the screen off state, controlling the brightness value of the touch area to be greater than or equal to the first preset brightness value, and keeping the display area other than the touch area of the screen of the mobile terminal in an off state.

In this embodiment of this disclosure, if it is detected that the mobile terminal is in the screen off state, it indicates that current touch by a user on the screen of the mobile terminal is highly likely intended to unlock the screen using a fingerprint. In this case, the brightness value of the touch area may be controlled to be greater than or equal to the first preset brightness value, to improve the fingerprint recognition rate. The display area other than the touch area of the screen of the mobile terminal is kept in the off state, thereby effectively reducing power consumption of the mobile terminal. For example, referring to FIG. 3, only an area touched by a user on the screen of the mobile terminal is displayed in white with high brightness, and other areas are in an off state.

It can be understood that when it is detected that the mobile terminal is in the screen off state, the display area other than the touch area of the screen of the mobile terminal may alternatively be displayed in black.

To further decrease power consumption of the mobile terminal, the state for fingerprint authentication includes a screen lock state, and the controlling, if it is detected that the mobile terminal is in a state for fingerprint authentication, a brightness value of the touch area to be greater than or equal to a first preset brightness value, and a brightness value of a display area other than the touch area of the screen of the mobile terminal to be less than the first preset brightness value includes:
if it is detected that the mobile terminal is in the screen lock state, controlling the brightness value of the touch area to be greater than or equal to the first preset brightness value, and keeping the brightness value of the display area other than the touch area of the screen of the mobile terminal unchanged when the brightness value of the display area other than the touch area of the screen of the mobile terminal is less than the first preset brightness value; or
if it is detected that the mobile terminal is in the screen lock state, controlling the brightness value of the touch area to be greater than or equal to the first preset brightness value, and the brightness value of the display area other than the touch area of the screen of the mobile terminal to be less than or equal to a second preset brightness value, where the second preset brightness value is less than the first preset brightness value.

In this embodiment of this disclosure, when it is detected that the mobile terminal is in the screen lock state, it indicates that current touch by the user on the screen of the mobile terminal is highly likely intended to unlock the screen using a fingerprint. In this case, the brightness value of the touch area may be controlled to be greater than or equal to the first preset brightness value, to improve the fingerprint recognition rate. The brightness value of the display area other than the touch area of the screen of the mobile terminal may be kept unchanged when the brightness value of the display area other than the touch area of the screen of the mobile terminal is less than the first preset brightness value.

The brightness value of the display area other than the touch area of the screen of the mobile terminal may be decreased to or below the second preset brightness value when the brightness value of the display area other than the touch area of the screen of the mobile terminal is not less than the first preset brightness value. If a brightness value of the screen of the mobile terminal is a maximum value when the mobile terminal is in the screen lock state, the brightness value of the touch area may remain maximum and the brightness value of the display area other than the touch area of the screen of the mobile terminal is decreased below the second preset brightness value (20% of the maximum screen brightness value), to reduce power consumption of the mobile terminal.

Optionally, in this embodiment of this disclosure, the brightness value of the touch area may alternatively be directly controlled to be greater than or equal to the first preset brightness value, the touch area to be in the preset color, and the brightness value of the display area other than the touch area of the screen of the mobile terminal to be less than or equal to the second preset brightness value.

It should be noted that the second preset brightness value may be properly set based on an actual need. For example, the second preset brightness value may be 20% of the maximum brightness value of the screen.

Optionally, in this embodiment of this disclosure, when the brightness value of the display area other than the touch area of the screen of the mobile terminal is kept unchanged or controlled to be less than or equal to the second preset brightness value, a transparent layer may also be superimposed on a display interface of the screen of the mobile terminal to reduce a gray scale of the interface displayed on the screen of the mobile terminal.

Optionally, to further decrease power consumption of the mobile terminal, the fingerprint recognition module includes at least two fingerprint sensors, and the collecting and recognizing fingerprint information of the touch area by using the fingerprint recognition module includes:
enabling a fingerprint sensor in a fingerprint scan area corresponding to the touch area;
collecting the fingerprint information of the touch area by using the fingerprint sensor in a fingerprint scan area corresponding to the touch area; and
recognizing the fingerprint information of the touch area.

In this embodiment of this disclosure, the fingerprint sensor may be an optical sensor. Specifically, the screen of the mobile terminal may be divided into at least two fingerprint scan areas in advance, and at least one fingerprint sensor may be provided for each fingerprint scan area. Therefore, a fingerprint scan area corresponding to the touch area can be determined based on a location of the touch area. In addition, only a fingerprint sensor in the fingerprint scan area corresponding to the touch area can be enabled to scan a fingerprint and collect fingerprint information of the touch area. This not only reduces power consumption of the mobile terminal, but also improves fingerprint scan efficiency. It can be understood that there may be one or at least two fingerprint scan areas corresponding to the touch area.

It can be understood that the foregoing various implementations may be combined as needed.

The following describes the embodiments of this disclosure with reference to examples.

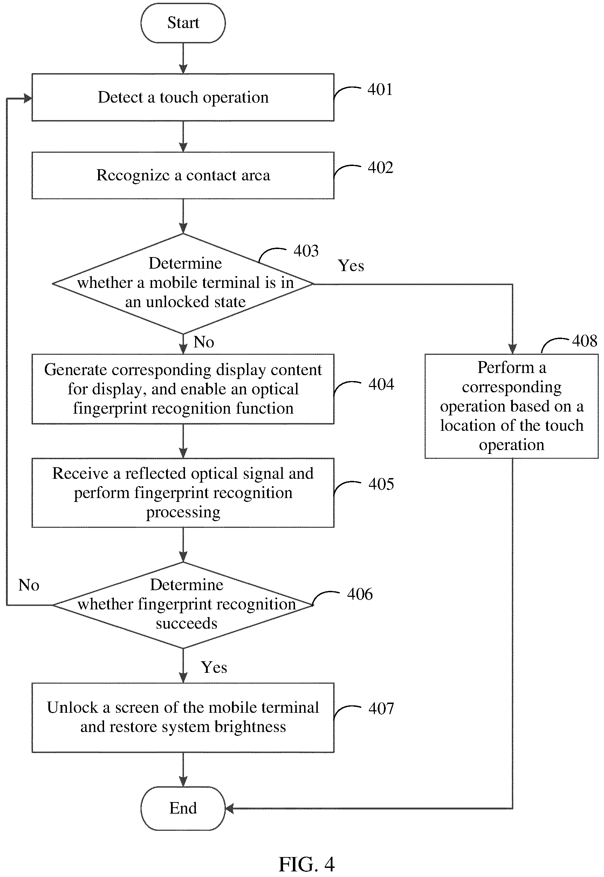

In the embodiments of this disclosure, the screen of the mobile terminal may include a touch module, a display module, and a fingerprint recognition module. The touch module may include a touchscreen and a controller of the touchscreen. The fingerprint recognition module may include an optical sensor and a fingerprint processing chip. Referring to FIG. 4, a fingerprint recognition method provided in an embodiment of this disclosure includes the following steps.

Step 401. Detect a touch operation.

In this step, the touch operation by a user finger on a screen of a mobile terminal may be detected by using the touch module.

Step 402. Recognize a contact area.

In this step, the contact area, that is, the touch area, of the user finger on the screen of the mobile terminal may be recognized by using the touch module and sent to a control module. The control module may include a processor.

Step 403. Determine whether the mobile terminal is in an unlocked state.

In this step, the control module may determine whether the mobile terminal is in the unlocked state. When it is determined that the mobile terminal is not in the unlocked state, step 404 may be performed. When it is determined that the mobile terminal is in the unlocked state, step 408 may be performed.

Step 404. Generate corresponding display content for display, and enable an optical fingerprint recognition function.

In this step, the corresponding display content may be generated by using the control module and sent to the display module for display.

Specifically, when the mobile terminal is in a screen off state, the touch area may be controlled to be in a high brightness state (that is, a brightness value of the touch area is greater than a first preset brightness value) and displayed in white, and a display area other than the touch area of the screen of the mobile terminal is in an off state, as shown in FIG. 3. Optionally, the display area other than the touch area of the screen of the mobile terminal may alternatively be controlled to display in black.

When the mobile terminal is in a screen lock state, the touch area may be controlled to be in a high brightness state (that is, a brightness value of the touch area is greater than a first preset brightness value) and displayed in white, and a brightness value or a gray scale of a display area other than the touch area of the screen of the mobile terminal may be reduced or kept unchanged.

Step 405. Receive a reflected optical signal and perform fingerprint recognition processing.

In this step, the fingerprint recognition module may receive the reflected optical signal and perform fingerprint recognition processing.

Step 406. Determine whether fingerprint recognition succeeds.

Specifically, if collected fingerprint information matches preset fingerprint information, it can be determined that fingerprint recognition succeeds, and step 407 is performed. Alternatively, if collected fingerprint information does not match preset fingerprint information, it can be determined that fingerprint recognition fails, and the process may end or return to step 401.

Step 407. Unlock the screen of the mobile terminal and restore system brightness.

In this step, the screen of the mobile terminal may be unlocked through the control module and the system brightness may be restored.

Step 408. Perform a corresponding operation based on a location of the touch operation.

According to the fingerprint recognition method in this embodiment of this disclosure, the touch area of the user finger on the screen of the mobile terminal can be recognized, and only the touch area is controlled to display with high brightness. This can reduce power consumption of the screen of the mobile terminal and extend service life of the mobile terminal. Secondly, only brightness of the touch area is increased, not requiring a driver chip with a stronger driving capability to drive for screen display, thereby reducing costs. Finally, only the touch area is controlled to display with high brightness, so that when ambient light is dim, especially at night, eye irritation caused by screen brightness to a user can be reduced.

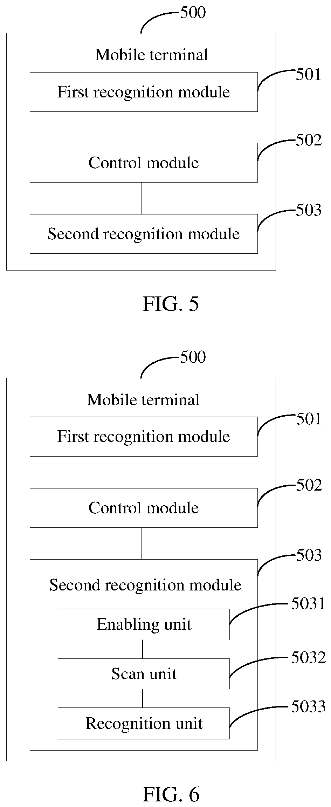

FIG. 5 is a structural diagram of a mobile terminal 500 according to an embodiment of this disclosure. A screen of the mobile terminal includes a fingerprint recognition module. As shown in FIG. 5, the mobile terminal 500 includes a first recognition module 501, a control module 502, and a second recognition module 503.

The first recognition module 501 is configured to: if a touch operation on the screen of the mobile terminal is detected, recognize a touch area, on which the touch operation is performed, of the screen of the mobile terminal.

The control module 502 is configured to: if it is detected that the mobile terminal is in a state for fingerprint authentication, control a brightness value of the touch area to be greater than or equal to a first preset brightness value, and a brightness value of a display area other than the touch area of the screen of the mobile terminal to be less than the first preset brightness value.

The second recognition module 503 is configured to collect and recognize fingerprint information of the touch area by using the fingerprint recognition module.

Optionally, the control module 502 is specifically configured to:
if it is detected that the mobile terminal is in the state for fingerprint authentication, control the brightness value of the touch area to be greater than or equal to the first preset brightness value, the touch area to be in a preset color, and the brightness value of the display area other than the touch area of the screen of the mobile terminal to be less than the first preset brightness value.

Optionally, the state for fingerprint authentication includes a screen off state, and the control module 502 is specifically configured to:
if it is detected that the mobile terminal is in the screen off state, control the brightness value of the touch area to be greater than or equal to the first preset brightness value, and keep the display area other than the touch area of the screen of the mobile terminal in an off state.

The state for fingerprint authentication includes a screen lock state, and the control module 502 is specifically configured to:
if it is detected that the mobile terminal is in the screen lock state, control the brightness value of the touch area to be greater than or equal to the first preset brightness value, and keep the brightness value of the display area other than the touch area of the screen of the mobile terminal unchanged when the brightness value of the display area other than the touch area of the screen of the mobile terminal is less than the first preset brightness value; or
if it is detected that the mobile terminal is in the screen lock state, control the brightness value of the touch area to be greater than or equal to the first preset brightness value, and the brightness value of the display area other than the touch area of the screen of the mobile terminal to be less than or equal to a second preset brightness value, where the second preset brightness value is less than the first preset brightness value.

Optionally, the fingerprint recognition module includes at least two fingerprint sensors. Referring to FIG. 6, the second recognition module 503 includes:
an enabling unit 5031, configured to enable a fingerprint sensor in a fingerprint scan area corresponding to the touch area;
a scan unit 5032, configured to collect the fingerprint information of the touch area by using the fingerprint sensor in a fingerprint scan area corresponding to the touch area; and
a recognition unit 5033, configured to recognize the fingerprint information of the touch area.

The mobile terminal 500 provided in this embodiment of this disclosure can implement various processes implemented by the mobile terminal in the method embodiments of FIG. 1, FIG. 2, and FIG. 4. To avoid repetition, details are not described herein again.

According to the mobile terminal 500 in this embodiment of this disclosure, the first recognition module 501 is configured to: if the touch operation on the screen of the mobile terminal is detected, recognize the touch area, on which the touch operation is performed, of the screen of the mobile terminal. The control module 502 is configured to: if it is detected that the mobile terminal is in the state for fingerprint authentication, control the brightness value of the touch area to be greater than or equal to the first preset brightness value, and the brightness value of the display area other than the touch area of the screen of the mobile terminal to be less than the first preset brightness value. The second recognition module 503 is configured to collect and recognize the fingerprint information of the touch area by using the fingerprint recognition module. Different from improving brightness of an entire screen to increase a fingerprint recognition rate, in this embodiment of this disclosure, only the brightness value of the touch area is controlled to be greater than or equal to the first preset brightness value to perform fingerprint collection and recognition. This can reduce power consumption and extend battery life of the mobile terminal while ensuring a relatively high fingerprint recognition rate.

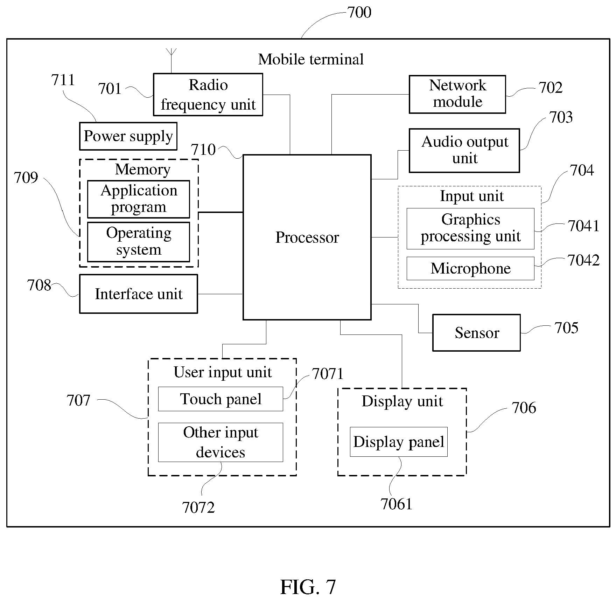

FIG. 7 is a schematic diagram of a hardware structure of a mobile terminal 700 for implementing embodiments of this disclosure not in accordance with the appended claims and given as examples useful for the understanding of the invention. Referring to FIG. 7, the mobile terminal 700 includes, but is not limited to, components such as a radio frequency unit 701, a network module 702, an audio output unit 703, an input unit 704, a sensor 705, a display unit 706, a user input unit 707, an interface unit 708, a memory 709, a processor 710, and a power supply 711. Persons skilled in the art can understand that the structure of the mobile terminal shown in FIG. 7 does not constitute any limitation on the mobile terminal. The mobile terminal may include more or fewer components than those shown in the figure, or may combine some components, or may have a different component arrangement. In this embodiment of this disclosure, the mobile terminal includes, but is not limited to, a mobile phone, a tablet computer, a laptop computer, a personal digital assistant, an in-vehicle terminal, a wearable device, a pedometer, and the like.

The processor 710 is configured to: if a touch operation on a screen of the mobile terminal is detected, recognize a touch area, on which the touch operation is performed, of the screen of the mobile terminal; if it is detected that the mobile terminal is in a state for fingerprint authentication, control a brightness value of the touch area to be greater than or equal to a first preset brightness value, and a brightness value of a display area other than the touch area of the screen of the mobile terminal to be less than the first preset brightness value; and collect and recognize fingerprint information of the touch area by using a fingerprint recognition module.

Different from improving brightness of an entire screen to increase a fingerprint recognition rate, in this embodiment of this disclosure, only the brightness value of the touch area is controlled to be greater than or equal to the first preset brightness value to perform fingerprint collection and recognition. This can reduce power consumption and extend battery life of the mobile terminal while ensuring a relatively high fingerprint recognition rate.

Optionally, the processor 710 is further configured to:
if it is detected that the mobile terminal is in the state for fingerprint authentication, control the brightness value of the touch area to be greater than or equal to the first preset brightness value, the touch area to be in a preset color, and the brightness value of the display area other than the touch area of the screen of the mobile terminal to be less than the first preset brightness value.

Optionally, the state for fingerprint authentication includes a screen off state, and the processor 710 is further configured to:
if it is detected that the mobile terminal is in the screen off state, control the brightness value of the touch area to be greater than or equal to the first preset brightness value, and keep the display area other than the touch area of the screen of the mobile terminal in an off state.

Optionally, the state for fingerprint authentication includes a screen lock state, and the processor 710 is further configured to:
if it is detected that the mobile terminal is in the screen lock state, control the brightness value of the touch area to be greater than or equal to the first preset brightness value, and keep the brightness value of the display area other than the touch area of the screen of the mobile terminal unchanged when the brightness value of the display area other than the touch area of the screen of the mobile terminal is less than the first preset brightness value; or
if it is detected that the mobile terminal is in the screen lock state, control the brightness value of the touch area to be greater than or equal to the first preset brightness value, and the brightness value of the display area other than the touch area of the screen of the mobile terminal to be less than or equal to a second preset brightness value, where the second preset brightness value is less than the first preset brightness value.

Optionally, the fingerprint recognition module includes at least two fingerprint sensors, and the processor 710 is further configured to:
enable a fingerprint sensor in a fingerprint scan area corresponding to the touch area;
collect the fingerprint information of the touch area by using the fingerprint sensor in a fingerprint scan area corresponding to the touch area; and
recognize the fingerprint information of the touch area.

It should be understood that in this embodiment of this disclosure, the radio frequency unit 701 may be configured to receive and send information, or receive and send a signal in a call process. Specifically, after receiving downlink data from a base station, the radio frequency unit 701 sends the downlink data to the processor 710 for processing, and sends uplink data to the base station. Generally, the radio frequency unit 701 includes, but is not limited to, an antenna, at least one amplifier, a transceiver, a coupler, a low noise amplifier, a duplexer, and the like. In addition, the radio frequency unit 701 may also communicate with a network and another device through a wireless communications system.

The mobile terminal provides a user with wireless broadband Internet access by using the network module 702, for example, helping the user send and receive e-mails, browse web pages, or access streaming media.

The audio output unit 703 may convert audio data received by the radio frequency unit 701 or the network module 702 or stored in the memory 709 into an audio signal and output a sound. Moreover, the audio output unit 703 may also provide an audio output (for example, a call signal reception sound or a message reception sound) related to a specific function performed by the mobile terminal 700. The audio output unit 703 includes a speaker, a buzzer, a receiver, or the like.

The input unit 704 is configured to receive an audio signal or a video signal. The input unit 704 may include a graphics processing unit (Graphics Processing Unit, GPU) 7041 and a microphone 7042. The graphics processing unit 7041 is configured to process a still image or video image data obtained by an image capture apparatus (for example, a camera) in a video capture mode or an image capture mode. A processed image frame may be displayed on the display unit 706. The image frame processed by the graphics processing unit 7041 may be stored in the memory 709 (or another storage medium) or sent by using the radio frequency unit 701 or the network module 702. The microphone 7042 can receive sounds and process such sounds into audio data. The processed audio data may be converted into a format output that can be sent to a mobile communication base station through the radio frequency unit 701 in a telephone call mode.

The mobile terminal 700 further includes at least one sensor 705, such as a light sensor and a motion sensor. Specifically, the light sensor includes an ambient light sensor and a proximity sensor. The ambient light sensor may adjust brightness of the display panel 7061 based on brightness of ambient light. The proximity sensor may close the display panel 7061 and/or backlight when the mobile terminal 700 is moved to an ear. As a type of motion sensor, an accelerometer sensor may detect accelerations in various directions (usually, three axes), may detect, in a still state, a magnitude and a direction of gravity, and may be configured to recognize a mobile terminal posture (for example, screen switching between a landscape mode and a portrait mode, a related game, and magnetometer posture calibration), implement a vibration recognition related function (for example, a pedometer or knocking), and the like. The sensor 705 may also include a fingerprint sensor, a pressure sensor, an iris sensor, a molecular sensor, a gyroscope, a barometer, a hygrometer, a thermometer, an infrared sensor, or the like. Details are not described herein.

The display unit 706 is configured to display information input by the user or provided to the user. The display unit 706 may include a display panel 7061. The display panel 7061 may be configured in a form of a liquid crystal display (Liquid Crystal Display, LCD), an organic light-emitting diode (Organic Light-Emitting Diode, OLED), or the like.

The user input unit 707 may be configured to receive input digit or character information, and generate a key signal input related to a user setting and function control of the mobile terminal. Specifically, the user input unit 707 includes a touch panel 7071 and other input devices 7072. The touch panel 7071, also referred to as a touchscreen, may collect a touch operation performed by the user on or near it (for example, an operation performed by the user on or near the touch panel 7071 by using any proper object or accessory such as a finger and a stylus). The touch panel 7071 may include two parts: a touch detection apparatus and a touch controller. The touch detection apparatus detects a touch orientation of the user, detects a signal brought by the touch operation, and transfers the signal to the touch controller. The touch controller receives touch information from the touch detection apparatus, converts the touch information to contact coordinates, and sends the contact coordinates to the processor 710; and receives and executes a command sent by the processor 710. In addition, the touch panel 7071 may be implemented in various types, such as a resistive type, a capacitive type, an infrared type, and a surface acoustic wave type. In addition to the touch panel 7071, the user input unit 707 may further include the other input devices 7072. Specifically, the other input devices 7072 may include, but are not limited to, a physical keyboard, a function key (such as a volume control key or a switch key), a trackball, a mouse, or a joystick. Details are not described herein.

Further, the touch panel 7071 may cover the display panel 7061. After detecting a touch operation on or near the touch panel 7071, the touch panel 7071 transmits information about the touch operation to the processor 710 to determine a type of a touch event, and then the processor 710 provides a corresponding visual output on the display panel 7061 based on the type of the touch event. In FIG. 7, the touch panel 7071 and the display panel 7061 are used as two independent parts to implement input and output functions of the mobile terminal. In some embodiments, however, the touch panel 7071 and the display panel 7061 may be integrated to implement the input and output functions of the mobile terminal. Details are not limited herein.

The interface unit 708 is an interface between an external apparatus and the mobile terminal 700. For example, the external apparatus may include a wired or wireless headphone port, an external power (or a battery charger) port, a wired or wireless data port, a memory card port, a port for connecting an apparatus with a recognition module, an audio input/output (I/O) port, a video I/O port, an earphone port, or the like. The interface unit 708 may be configured to receive an input (for example, data information or power) from the external apparatus and transmit the received input to one or more elements of the mobile terminal 700, or transmit data between the external apparatus and the mobile terminal 700.

The memory 709 may be configured to store a software program and various data. The memory 709 may mainly include a program storage area and a data storage area. The program storage area may store an operating system, an application program required for at least one function (for example, a sound playback function and an image playback function), and the like. The data storage area may store data (for example, audio data and a phone book) created based on use of the mobile phone, and the like. In addition, the memory 709 may include a high-speed random access memory, and may further include a non-volatile memory such as at least one disk storage device, a flash memory device, or another volatile solid-state storage device.

The processor 710, as a control center of the mobile terminal, is connected to all parts of the entire mobile terminal by using various interfaces and lines. By running or executing a software program and/or module that is stored in the memory 709 and invoking data stored in the memory 709, the processor 710 executes various functions of the mobile terminal and processes data, so as to perform overall monitoring on the mobile terminal. The processor 710 may include one or more processing units. Optionally, an application processor and a modem processor may be integrated into the processor 710. The application processor mainly processes an operating system, a user interface, an application program, and the like. The modem processor mainly processes wireless communication. It can be understood that the modem processor may not be integrated into the processor 710.

The mobile terminal 700 may further include the power supply 711 (for example, a battery) that supplies power to all the components. Optionally, the power supply 711 may be logically connected to the processor 710 through a power management system, so as to implement functions, such as charge management, discharge management, and power consumption management, by using the power management system.

In addition, the mobile terminal 700 includes some functional modules not shown. Details are not described herein.

Optionally, an embodiment of this disclosure further provides a mobile terminal, including a processor 710, a memory 709, a computer program stored in the memory 709 and capable of running on the processor 710. The computer program is executed by the processor 710 to implement processes of the embodiments of the foregoing fingerprint recognition methods, and a same technical effect can be achieved. To avoid repetition, details are not described herein again.

An embodiment of this disclosure further provides a computer-readable storage medium. The computer-readable storage medium stores a computer program. The computer program is executed by a processor to implement processes of the embodiments of the foregoing fingerprint recognition methods, and a same technical effect can be achieved. To avoid repetition, details are not described herein again. The computer-readable storage medium, such as a read-only memory (Read-Only Memory, ROM), random access memory (Random Access Memory, RAM), magnetic disk, or an optical disc.

It should be noted that the terms "include", "comprise", or any of their variants are intended to cover a non-exclusive inclusion, such that a process, a method, an article, or an apparatus that includes a list of elements not only includes those elements but also includes other elements which are not expressly listed, or further includes elements inherent to such process, method, article, or apparatus. In absence of more constraints, an element preceded by "includes a..." does not preclude the existence of other identical elements in the process, method, article, or apparatus that includes the element.

According to the foregoing descriptions of the implementations, persons skilled in the art may clearly understand that the methods in the embodiments may be implemented by using software and a necessary general hardware platform, or, certainly, may be implemented by using hardware. However, the former is a more preferred implementation in most cases. Based on such an understanding, the technical solutions in this disclosure essentially, or the part contributing to the related technologies may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this disclosure.

The embodiments of this disclosure have been described above with reference to the accompanying drawings. However, this disclosure is not limited to the foregoing specific implementations, and these specific implementations are merely illustrative rather than limitative. Persons of ordinary skill in the art may further derive many other implementations based on the teachings of this disclosure without departing from the protection scope of the claims. All the other implementations fall within the protection scope of this disclosure as defined by the appended claims.

## Claims

1. A fingerprint recognition method applied to a mobile terminal, wherein a screen of the mobile terminal comprises a fingerprint recognition module, wherein the method comprises:
recognizing (101, 201), if a touch operation on the screen of the mobile terminal is detected, a touch area, on which the touch operation is performed, of the screen of the mobile terminal;
controlling (102), if it is detected that the mobile terminal is in a state for fingerprint authentication, a brightness value of the touch area to be greater than or equal to a first preset brightness value, and a brightness value of a display area other than the touch area of the screen of the mobile terminal to be less than the first preset brightness value; and
collecting (103, 203) and recognizing fingerprint information of the touch area by using the fingerprint recognition module;
**characterized in that** the state for fingerprint authentication comprises a screen lock state, and the controlling, if it is detected that the mobile terminal is in a state for fingerprint authentication, a brightness value of the touch area to be greater than or equal to a first preset brightness value, and a brightness value of a display area other than the touch area of the screen of the mobile terminal to be less than the first preset brightness value comprises:
if it is detected that the mobile terminal is in the screen lock state and a brightness value of the entire screen of the mobile terminal is a maximum value, controlling the brightness value of the touch area to be maintained as the maximum value, and controlling the brightness value of the entire display area other than the touch area of the screen of the mobile terminal to be decreased to be a second preset brightness value from the maximum value, and reducing a gray scale of a display interface of the screen of the mobile terminal through superimposing a transparent layer on the display interface of the screen of the mobile terminal, wherein the second preset brightness value is 20% or 50% of the maximum screen brightness value.

2. The method according to claim 1, wherein the controlling, if it is detected that the mobile terminal is in a state for fingerprint authentication, a brightness value of the touch area to be greater than or equal to a first preset brightness value, and a brightness value of a display area other than the touch area of the screen of the mobile terminal to be less than the first preset brightness value comprises:
if it is detected that the mobile terminal is in the state for fingerprint authentication, controlling (202) the brightness value of the touch area to be greater than or equal to the first preset brightness value, the touch area to be in a preset color, and the brightness value of the display area other than the touch area of the screen of the mobile terminal to be less than the first preset brightness value.

3. The method according to claim 1, wherein the state for fingerprint authentication comprises a screen off state, and the controlling, if it is detected that the mobile terminal is in a state for fingerprint authentication, a brightness value of the touch area to be greater than or equal to a first preset brightness value, and a brightness value of a display area other than the touch area of the screen of the mobile terminal to be less than the first preset brightness value comprises:
if it is detected that the mobile terminal is in the screen off state, controlling the brightness value of the touch area to be greater than or equal to the first preset brightness value, and keeping the display area other than the touch area of the screen of the mobile terminal in an off state.

4. The method according to any one of claims 1 to 3, wherein the fingerprint recognition module comprises at least two fingerprint sensors, and the collecting and recognizing fingerprint information of the touch area by using the fingerprint recognition module comprises:
enabling a fingerprint sensor in a fingerprint scan area corresponding to the touch area;
collecting the fingerprint information of the touch area by using the fingerprint sensor in a fingerprint scan area corresponding to the touch area; and
recognizing the fingerprint information of the touch area.

5. A mobile terminal, wherein the mobile terminal comprises a touch panel, a screen of the mobile terminal comprises a fingerprint recognition module, wherein the mobile terminal comprises:
a first recognition module (501), configured to: if a touch operation on the screen of the mobile terminal is detected, recognize a touch area, on which the touch operation is performed, of the screen of the mobile terminal;
a control module (502), configured to: if it is detected that the mobile terminal is in a state for fingerprint authentication, control a brightness value of the touch area to be greater than or equal to a first preset brightness value, and a brightness value of a display area other than the touch area of the screen of the mobile terminal to be less than the first preset brightness value; and
a second recognition module (503), configured to collect and recognize fingerprint information of the touch area by using the fingerprint recognition module;
**characterized in that** the state for fingerprint authentication comprises a screen lock state, and the control module (502) is specifically configured to:
if it is detected that the mobile terminal is in the screen lock state and a brightness value of the entire screen of the mobile terminal is a maximum value, control the brightness value of the touch area to be maintained as the maximum value, and control the brightness value of the entire display area other than the touch area of the screen of the mobile terminal to be decreased to be a second preset brightness value from the maximum value, and reduce a gray scale of a display interface of the screen of the mobile terminal through superimposing a transparent layer on the display interface of the screen of the mobile terminal, wherein the second preset brightness value is 20% or 50% of the maximum screen brightness value.

6. The mobile terminal according to claim 5, wherein the control module (502) is specifically configured to:
if it is detected that the mobile terminal is in the state for fingerprint authentication, control the brightness value of the touch area to be greater than or equal to the first preset brightness value, the touch area to be in a preset color, and the brightness value of the display area other than the touch area of the screen of the mobile terminal to be less than the first preset brightness value.

7. The mobile terminal according to claim 5, wherein the state for fingerprint authentication comprises a screen off state, and the control module (502) is specifically configured to:
if it is detected that the mobile terminal is in the screen off state, control the brightness value of the touch area to be greater than or equal to the first preset brightness value, and keep the display area other than the touch area of the screen of the mobile terminal in an off state.

8. The mobile terminal according to any one of claims 5 to 7, wherein the fingerprint recognition module comprises at least two fingerprint sensors, and the second recognition module (503) comprises:
an enabling unit (5031), configured to enable a fingerprint sensor in a fingerprint scan area corresponding to the touch area;
a scan unit (5032), configured to collect the fingerprint information of the touch area by using the fingerprint sensor in a fingerprint scan area corresponding to the touch area; and
a recognition unit (5033), configured to recognize the fingerprint information of the touch area.

## Patentansprüche

1. Fingerabdruckerkennungsverfahren, das auf ein mobiles Endgerät angewendet wird, wobei ein Bildschirm des mobilen Endgeräts ein Fingerabdruckerkennungsmodul umfasst, wobei das Verfahren Folgendes umfasst:
Erkennen (101, 201) eines Berührungsbereichs des Bildschirms des mobilen Endgeräts, auf dem die Berührungsoperation durchgeführt wird, wenn eine Berührungsoperation auf dem Bildschirm des mobilen Endgeräts erkannt wird;
Steuern (102), wenn erfasst wird, dass sich das mobile Endgerät in einem Zustand zur Fingerabdruck-Authentifizierung befindet, eines Helligkeitswertes des Berührungsbereichs, um größer oder gleich einem ersten voreingestellten Helligkeitswert zu sein, und eines Helligkeitswertes eines anderen Anzeigebereichs als des Berührungsbereichs des Bildschirms des mobilen Endgeräts, um kleiner als der erste voreingestellte Helligkeitswert zu sein; und
Sammeln (103, 203) und Erkennen von Fingerabdruckinformationen des Berührungsbereichs unter Verwendung des Fingerabdruckerkennungsmoduls;
**dadurch gekennzeichnet, dass** der Zustand für die Fingerabdruck-Authentifizierung einen Bildschirmsperrzustand umfasst und das Steuern, wenn erfasst wird, dass sich das mobile Endgerät in einem Zustand für die Fingerabdruck-Authentifizierung befindet, eines Helligkeitswerts des Berührungsbereichs, um größer als oder gleich einem ersten voreingestellten Helligkeitswert zu sein, und eines Helligkeitswerts eines anderen Anzeigebereichs als des Berührungsbereichs des Bildschirms des mobilen Endgeräts, um kleiner als der erste voreingestellte Helligkeitswert zu sein, Folgendes umfasst:
wenn erfasst wird, dass sich das mobile Endgerät in dem Bildschirmsperrzustand befindet und ein Helligkeitswert des gesamten Bildschirms des mobilen Endgeräts ein Maximalwert ist, Steuern des Helligkeitswerts des Berührungsbereichs, um als der Maximalwert beibehalten zu werden, und Steuern des Helligkeitswerts des gesamten Anzeigebereichs außer dem Berührungsbereich des Bildschirms des mobilen Endgeräts, um auf einen zweiten voreingestellten Helligkeitswert von dem Maximalwert verringert zu werden und Reduzieren einer Grauskala einer Anzeigeschnittstelle des Bildschirms des mobilen Endgeräts durch Überlagern einer transparenten Schicht auf der Anzeigeschnittstelle des Bildschirms des mobilen Endgeräts, wobei der zweite voreingestellte Helligkeitswert 20 % oder 50 % des maximalen Bildschirmhelligkeitswerts beträgt.

2. Verfahren nach Anspruch 1, wobei, wenn erkannt wird, dass sich das mobile Endgerät in einem Zustand für eine Fingerabdruck-Authentifizierung befindet, das Steuern eines Helligkeitswerts des Berührungsbereichs, der größer oder gleich einem ersten voreingestellten Helligkeitswert ist, und eines Helligkeitswerts eines anderen Anzeigebereichs als des Berührungsbereichs des Bildschirms des mobilen Endgeräts, der kleiner als der erste voreingestellte Helligkeitswert ist, Folgendes umfasst:
wenn erkannt wird, dass sich das mobile Endgerät in dem Zustand für die Fingerabdruck-Authentifizierung befindet, Steuern (202) des Helligkeitswertes des Berührungsbereichs so, dass er größer oder gleich dem ersten voreingestellten Helligkeitswert ist, dass der Berührungsbereich in einer voreingestellten Farbe ist, und dass der Helligkeitswert des Anzeigebereichs, der nicht der Berührungsbereich des Bildschirms des mobilen Endgeräts ist, kleiner als der erste voreingestellte Helligkeitswert ist.

3. Verfahren nach Anspruch 1, wobei der Zustand für die Fingerabdruck-Authentifizierung einen Bildschirm-Aus-Zustand umfasst, und das Steuern, wenn erfasst wird, dass sich das mobile Endgerät in einem Zustand für die Fingerabdruck-Authentifizierung befindet, eines Helligkeitswerts des Berührungsbereichs, der größer oder gleich einem ersten voreingestellten Helligkeitswert ist, und eines Helligkeitswerts eines anderen Anzeigebereichs als des Berührungsbereichs des Bildschirms des mobilen Endgeräts, der kleiner als der erste voreingestellte Helligkeitswert ist, umfasst:
wenn erkannt wird, dass sich das mobile Endgerät im Bildschirm-Aus-Zustand befindet, den Helligkeitswert des Berührungsbereichs so zu steuern, dass er größer oder gleich dem ersten voreingestellten Helligkeitswert ist, und den Anzeigebereich, der nicht der Berührungsbereich des Bildschirms des mobilen Endgeräts ist, in einem ausgeschalteten Zustand zu halten.

4. Verfahren nach einem der Ansprüche 1 bis 3, wobei das Fingerabdruckerkennungsmodul mindestens zwei Fingerabdrucksensoren umfasst, und das Sammeln und Erkennen von Fingerabdruckinformationen des Berührungsbereichs unter Verwendung des Fingerabdruckerkennungsmoduls Folgendes umfasst:
Aktivierung eines Fingerabdrucksensors in einem Fingerabdruck-Scanbereich, der dem Berührungsbereich entspricht;
Sammeln der Fingerabdruckinformationen des Berührungsbereichs unter Verwendung des Fingerabdrucksensors in einem dem Berührungsbereich entsprechenden Fingerabdruck-Scanbereich; und
Erkennen der Fingerabdruckinformationen des Berührungsbereichs.

5. Ein mobiles Endgerät, wobei das mobile Endgerät ein Berührungsfeld umfasst, ein Bildschirm des mobilen Endgeräts ein Fingerabdruckerkennungsmodul umfasst, wobei das mobile Endgerät Folgendes umfasst:
ein erstes Erkennungsmodul (501), das so konfiguriert ist, dass es: wenn eine Berührungsoperation auf dem Bildschirm des mobilen Endgeräts erfasst wird, einen Berührungsbereich des Bildschirms des mobilen Endgeräts erkennt, auf dem die Berührungsoperation durchgeführt wird;
ein Steuermodul (502), das so konfiguriert ist, dass es: wenn erfasst wird, dass sich das mobile Endgerät in einem Zustand zur Fingerabdruck-Authentifizierung befindet, einen Helligkeitswert des Berührungsbereichs so steuert, dass er größer oder gleich einem ersten voreingestellten Helligkeitswert ist, und einen Helligkeitswert eines anderen Anzeigebereichs als des Berührungsbereichs des Bildschirms des mobilen Endgeräts so steuert, dass er kleiner als der erste voreingestellte Helligkeitswert ist; und
ein zweites Erkennungsmodul (503), das so konfiguriert ist, dass es Fingerabdruckinformationen des Berührungsbereichs unter Verwendung des Fingerabdruckerkennungsmoduls erfasst und erkennt;
**dadurch gekennzeichnet, dass** der Zustand für die Fingerabdruck-Authentifizierung einen Bildschirmsperrzustand umfasst, und das Steuermodul (502) speziell konfiguriert ist, um:
wenn erfasst wird, dass sich das mobile Endgerät in dem Bildschirmsperrzustand befindet und ein Helligkeitswert des gesamten Bildschirms des mobilen Endgeräts ein Maximalwert ist, den Helligkeitswert des Berührungsbereichs zu steuern, um als der Maximalwert beibehalten zu werden, und den Helligkeitswert des gesamten Anzeigebereichs außer dem Berührungsbereich des Bildschirms des mobilen Endgeräts zu steuern, um auf einen zweiten voreingestellten Helligkeitswert von dem Maximalwert verringert zu werden und eine Grauskala einer Anzeigeschnittstelle des Bildschirms des mobilen Endgeräts durch Überlagern einer transparenten Schicht auf der Anzeigeschnittstelle des Bildschirms des mobilen Endgeräts zu reduzieren, wobei der zweite voreingestellte Helligkeitswert 20 % oder 50 % des maximalen Bildschirmhelligkeitswertes beträgt.

6. Endgerät nach Anspruch 5, wobei das Steuermodul (502) speziell zu Folgendem konfiguriert ist:
wenn erkannt wird, dass sich das mobile Endgerät im Zustand für die Fingerabdruck-Authentifizierung befindet, den Helligkeitswert des Berührungsbereichs so steuern, dass er größer oder gleich dem ersten voreingestellten Helligkeitswert ist, den Berührungsbereich in einer voreingestellten Farbe darstellen und den Helligkeitswert des Anzeigebereichs, der nicht der Berührungsbereich des Bildschirms des mobilen Endgeräts ist, so steuern, dass er kleiner als der erste voreingestellte Helligkeitswert ist.

7. Mobiles Endgerät nach Anspruch 5, wobei der Zustand für die Fingerabdruck-Authentifizierung einen Bildschirm-Aus-Zustand umfasst, und das Steuermodul (502) speziell zu Folgendem konfiguriert ist:
wenn erkannt wird, dass sich das mobile Endgerät im Bildschirm-Aus-Zustand befindet, den Helligkeitswert des Berührungsbereichs so zu steuern, dass er größer oder gleich dem ersten voreingestellten Helligkeitswert ist, und den Anzeigebereich außer dem Berührungsbereich des Bildschirms des mobilen Endgeräts in einem ausgeschalteten Zustand zu halten.

8. Mobiles Endgerät nach einem der Ansprüche 5 bis 7, wobei das Fingerabdruckerkennungsmodul mindestens zwei Fingerabdrucksensoren umfasst, und das zweite Erkennungsmodul (503) Folgendes umfasst:
eine Aktivierungseinheit (5031), die so konfiguriert ist, dass sie einen Fingerabdrucksensor in einem Fingerabdruck-Scanbereich aktiviert, der dem Berührungsbereich entspricht;
eine Scaneinheit (5032), die so konfiguriert ist, dass sie die Fingerabdruckinformationen des Berührungsbereichs unter Verwendung des Fingerabdrucksensors in einem Fingerabdruck-Scanbereich, der dem Berührungsbereich entspricht, erfasst; und
eine Erkennungseinheit (5033), die so konfiguriert ist, dass sie die Fingerabdruckinformationen des Berührungsbereichs erkennt.

## Revendications

1. Procédé de reconnaissance d'empreintes digitales appliqué à un terminal mobile, dans lequel un écran du terminal mobile comprend un module de reconnaissance d'empreintes digitales, dans lequel le procédé comprend :
reconnaître (101, 201), si une opération tactile sur l'écran du terminal mobile est détectée, une zone tactile de l'écran du terminal mobile sur laquelle l'opération tactile est effectuée ;
contrôler (102), s'il est détecté que le terminal mobile est en état d'authentification par empreinte digitale, une valeur de luminosité de la zone tactile supérieure ou égale à une première valeur de luminosité prédéfinie, et une valeur de luminosité d'une zone d'affichage autre que la zone tactile de l'écran du terminal mobile inférieure à la première valeur de luminosité prédéfinie ; et
collecter (103, 203) et reconnaître les informations d'empreintes digitales de la zone tactile à l'aide du module de reconnaissance d'empreintes digitales ;
**caractérisé en ce que** l'état d'authentification par empreinte digitale comprend un état de verrouillage de l'écran, et le contrôle, s'il est détecté que le terminal mobile est dans un état d'authentification par empreinte digitale, d'une valeur de luminosité de la zone tactile supérieure ou égale à une première valeur de luminosité prédéfinie, et d'une valeur de luminosité d'une zone d'affichage autre que la zone tactile de l'écran du terminal mobile inférieure à la première valeur de luminosité prédéfinie, comprend :
s'il est détecté que le terminal mobile est dans l'état de verrouillage de l'écran et qu'une valeur de luminosité de l'écran entier du terminal mobile est une valeur maximale, contrôler la valeur de luminosité de la zone tactile pour maintenir la valeur maximale, et contrôler la valeur de luminosité de la zone d'affichage entière autre que la zone tactile de l'écran du terminal mobile pour diminuer jusqu'à une deuxième valeur de luminosité prédéfinie par rapport à la valeur maximale, et réduction de l'échelle de gris d'une interface d'affichage de l'écran du terminal mobile par la superposition d'une couche transparente sur l'interface d'affichage de l'écran du terminal mobile, la deuxième valeur de luminosité prédéfinie étant de 20 % ou 50 % de la valeur de luminosité maximale de l'écran.

2. Procédé selon la revendication 1, dans lequel le contrôle, s'il est détecté que le terminal mobile est dans un état d'authentification par empreinte digitale, d'une valeur de luminosité de la zone tactile supérieure ou égale à une première valeur de luminosité prédéfinie, et d'une valeur de luminosité d'une zone d'affichage autre que la zone tactile de l'écran du terminal mobile inférieure à la première valeur de luminosité prédéfinie, comprend :
s'il est détecté que le terminal mobile est en état d'authentification par empreinte digitale, contrôler (202) la valeur de luminosité de la zone tactile pour qu'elle soit supérieure ou égale à la première valeur de luminosité prédéfinie, la zone tactile pour qu'elle soit dans une couleur prédéfinie, et la valeur de luminosité de la zone d'affichage autre que la zone tactile de l'écran du terminal mobile pour qu'elle soit inférieure à la première valeur de luminosité prédéfinie.

3. Procédé selon la revendication 1, dans lequel l'état d'authentification par empreinte digitale comprend un état d'écran éteint, et le contrôle, s'il est détecté que le terminal mobile est dans un état d'authentification par empreinte digitale, d'une valeur de luminosité de la zone tactile supérieure ou égale à une première valeur de luminosité prédéfinie, et d'une valeur de luminosité d'une zone d'affichage autre que la zone tactile de l'écran du terminal mobile inférieure à la première valeur de luminosité prédéfinie, comprend :
s'il est détecté que le terminal mobile est dans l'état d'écran éteint, contrôler la valeur de luminosité de la zone tactile pour qu'elle soit supérieure ou égale à la première valeur de luminosité prédéfinie, et maintenir la zone d'affichage autre que la zone tactile de l'écran du terminal mobile dans un état éteint.

4. Procédé selon l'une quelconque des revendications 1 à 3, dans lequel le module de reconnaissance d'empreintes digitales comprend au moins deux capteurs d'empreintes digitales, et la collecte et la reconnaissance des informations d'empreintes digitales de la zone tactile à l'aide du module de reconnaissance d'empreintes digitales comprennent :
activer un capteur d'empreintes digitales dans une zone de balayage d'empreintes digitales correspondant à la zone tactile ;
recueillir les informations relatives à l'empreinte digitale de la zone tactile en utilisant le capteur d'empreintes digitales dans une zone de balayage d'empreintes digitales correspondant à la zone tactile ; et
reconnaître les informations relatives à l'empreinte digitale de la zone tactile.

5. Un terminal mobile, dans lequel le terminal mobile comprend un écran tactile, un écran du terminal mobile comprend un module de reconnaissance d'empreintes digitales, dans lequel le terminal mobile comprend :
un premier module de reconnaissance (501), configuré pour : si une opération tactile sur l'écran du terminal mobile est détectée, reconnaître une zone tactile, sur laquelle l'opération tactile est effectuée, de l'écran du terminal mobile ;
un module de commande (502), configuré pour : s'il est détecté que le terminal mobile est dans un état d'authentification par empreinte digitale, contrôler une valeur de luminosité de la zone tactile supérieure ou égale à une première valeur de luminosité prédéfinie, et une valeur de luminosité d'une zone d'affichage autre que la zone tactile de l'écran du terminal mobile inférieure à la première valeur de luminosité prédéfinie ; et
un deuxième module de reconnaissance (503), configuré pour recueillir et reconnaître les informations relatives aux empreintes digitales de la zone tactile à l'aide du module de reconnaissance d'empreintes digitales ;
**caractérisé en ce que** l'état d'authentification des empreintes digitales comprend un état de verrouillage de l'écran, et que le module de commande (502) est spécifiquement configuré pour :
s'il est détecté que le terminal mobile est dans l'état de verrouillage de l'écran et qu'une valeur de luminosité de l'écran entier du terminal mobile est une valeur maximale, contrôler la valeur de luminosité de la zone tactile pour maintenir la valeur maximale, et contrôler la valeur de luminosité de la zone d'affichage entière autre que la zone tactile de l'écran du terminal mobile pour être réduite à une deuxième valeur de luminosité prédéfinie par rapport à la valeur maximale, et réduire l'échelle de gris d'une interface d'affichage de l'écran du terminal mobile en superposant une couche transparente sur l'interface d'affichage de l'écran du terminal mobile, la deuxième valeur de luminosité prédéfinie étant de 20 % ou 50 % de la valeur de luminosité maximale de l'écran.

6. Terminal mobile selon la revendication 5, dans lequel le module de commande (502) est spécifiquement configuré pour :
s'il est détecté que le terminal mobile est en état d'authentification par empreinte digitale, contrôler la valeur de luminosité de la zone tactile pour qu'elle soit supérieure ou égale à la première valeur de luminosité prédéfinie, la zone tactile pour qu'elle soit dans une couleur prédéfinie, et la valeur de luminosité de la zone d'affichage autre que la zone tactile de l'écran du terminal mobile pour qu'elle soit inférieure à la première valeur de luminosité prédéfinie.

7. Terminal mobile selon la revendication 5, dans lequel l'état d'authentification des empreintes digitales comprend un état d'écran éteint, et le module de commande (502) est spécifiquement configuré pour :
s'il est détecté que le terminal mobile est dans l'état d'écran éteint, contrôler la valeur de luminosité de la zone tactile pour qu'elle soit supérieure ou égale à la première valeur de luminosité prédéfinie, et maintenir la zone d'affichage autre que la zone tactile de l'écran du terminal mobile dans un état éteint.

8. Terminal mobile selon l'une quelconque des revendications 5 à 7, dans lequel le module de reconnaissance d'empreintes digitales comprend au moins deux capteurs d'empreintes digitales, et le second module de reconnaissance (503) comprend :
une unité d'activation (5031), configurée pour activer un capteur d'empreintes digitales dans une zone de balayage d'empreintes digitales correspondant à la zone tactile ;
une unité de balayage (5032), configurée pour collecter les informations d'empreintes digitales de la zone tactile en utilisant le capteur d'empreintes digitales dans une zone de balayage d'empreintes digitales correspondant à la zone tactile ; et
une unité de reconnaissance (5033), configurée pour reconnaître les informations d'empreintes digitales de la zone tactile.
